(19) **Europäisches Patentamt**

**European Patent Office**

**Office européen des brevets**

(11) **EP 0 720 722 B1**

(12) **EUROPÄISCHE PATENTSCHRIFT**

(45) Veröffentlichungstag und Bekanntmachung des Hinweises auf die Patenterteilung:
**27.09.2000 Patentblatt 2000/39**

(51) Int Cl.⁷: **G01B 11/24**

(21) Anmeldenummer: **95925865.8**

(86) Internationale Anmeldenummer:
**PCT/EP95/02734**

(22) Anmeldetag: **12.07.1995**

(87) Internationale Veröffentlichungsnummer:
**WO 96/03617 (08.02.1996 Gazette 1996/07)**

(54) **VORRICHTUNG ZUR RASTERSTEREOGRAFISCHEN VERMESSUNG VON KÖRPEROBERFLÄCHEN**

DEVICE FOR MEASURING BODY SURFACES BY RASTER STEREOGRAPHY

DISPOSITIF DE MESURE DES SURFACES DES CORPS PAR STEREOGRAPHIE PAR TRAME

(84) Benannte Vertragsstaaten:
**DE FR GB SE**

(30) Priorität: **26.07.1994 DE 4426424**

(43) Veröffentlichungstag der Anmeldung:
**10.07.1996 Patentblatt 1996/28**

(73) Patentinhaber: **ASCLEPION-MEDITEC AG**
**07739 Jena (DE)**

(72) Erfinder:
• **HIERHOLZER, Eberhard**
**D-48161 Münster (DE)**
• **DRERUP, Burkhard**
**D-48153 Münster (DE)**

(74) Vertreter: **Geyer, Werner, Dr.-Ing. et al**
**Patentanwälte**
**Geyer, Fehners & Partner**
**Perhamerstrasse 31**
**80687 München (DE)**

(56) Entgegenhaltungen:
**EP-A- 0 253 185**

• **IEEE TRANSACTIONS ON PATTERN ANALYSES AND MACHINE INTELLIGENCE, Bd. 15, Nr. 6, Juni 1993 NEW YORK, NY, USA, Seiten 647-651, MINORU MARUYAMA, SHIGERU ABE 'Range Sensing by Projecting Multiple Slits with Random Cuts'**
• **IBM TECHNICAL DISCLOSURE BULLETIN, Bd. 29, Nr. 11, April 1987 ARMONK, NY,USA, Seiten 4847-4848, 'Color-Coded Light-Sectioning Method'**

**Beschreibung**

Die Erfindung betrifft eine Vorrichtung zur rasterstereografischen Vermessung von Körperoberflächen, vorzugsweise unregelmäßig geformter Objekte, mit einem Rasterprojektor zur Projektion einer zugehörigen Rastervorlage mit einer Vielzahl von Rasterlinien auf die Körperoberfläche und mit einer Kamera zur Aufzeichnung eines durch die Oberflächengestalt verzerrten Linienbildes der Rastervorlage, wobei der Rasterprojektor mit der Kamera eine Stereobasis bildet und die Rastervorlage örtlich modulierte Rasterlinien aufweist, bei denen sich benachbarte Rasterlinien voneinander unterscheiden.

Eine Vorrichtung der genannten Art wird in dem Artikel von M. Maruyama und S. Abe: "Range Sensing by Projecting Multiple Slits with Random Cuts", IEEE Transactions on Pattern Analysis and Machine Intellegence, Bd. 15, Nr. 6, New York, 1993, Seiten 647-651, beschrieben. Aus der regelmäßigen Wiederkehr der Rasterlinien, bei denen nach jeder Hell-Zone eine Dunkel-Zone folgt, kann auf die Ordnungsnummer geschlossen werden, beispielsweise dadurch, daß die Linien von links nach rechts durchgezählt werden. Benachbarte Linien unterscheiden sich deutlich dadurch, daß sie an unterschiedlichen Stellen verschnitten sind.

Weiterhin ist es aus der Druckschrift "Color Coded Light-Sectioning Method", IBM Technical Disclosure Bulletin, Bd. 29, Nr. 11, Armonk, NY, USA, 1987, Seiten 4847-4848, bekannt, Rasterlinien mit unterschiedlicher Lichtwellenlänge einzusetzen.

Für die Projektion der Rasterlinien kann man zwei unterschiedliche Prinzipien einsetzen. Zum einen wird das Linienraster durch zeilenweises Abtasten der Oberfläche mit einem Lichtstrahl erzielt (beschrieben beispielsweise von A. R. TURNER-SMITH in Journal of Biomechanics 21 [1998], 515-529). Zum anderen wurde von FROBIN und HIERHOLZER (in Photogrammetric Engineering and Remote Sensing 47 [1998], 1717-1724) eine Methode der Oberflächenvermessung mit einem aufprojizierten Gitter vorgestellt, wobei für die Modellrekonstruktion des Körpers das Gitter periodisch wiederkehrende Rasterlinien größerer Dicke enthält.

Beim Verfahren der Rasterstereografie wird das gesamte, von der untersuchten Oberfläche reflektierte Muster von einer Kamera in einem einzigen Bild erfaßt. Damit ist zwar eine kurze Aufnahmezeit möglich, das entstehende Bild kann jedoch so kompliziert sein, daß eine aufwendige Bildanalyse erforderlich ist, um die Bildstrukturen den aufprojizierten Rasterlinien zuzuordnen.

Letzteres ist für eine korrekte Modellkonstruktion der Körperoberfläche unabdingbar. Aus diesem Grund darf die Dichte des projizierten Musters auch nicht zu groß sein, obwohl eine höhere Dichte die theoretisch mögliche Auflösung des Bildes erhöhen würde. Die maximal mögliche Dichte ist von der Oberflächenform, insbesondere von der Tiefenmodulation, abhängig.

Der Erfindung liegt die Aufgabe zugrunde, ohne Beeinträchtigung der Bildananlyse eine besonders hohe Abtastdichte zu erreichen.

Zur Lösung dieser Aufgabe sieht die Erfindung bei einer Vorrichtung zur rasterstereografischen Vermessung von Körperoberflächen, vorzugsweise unregelmäßig geformter Objekte, der einleitend genannten Art vor, daß die Rastervorlage Rasterlinien mit periodischen Strukturen unterschiedlicher Form enthält, und die Rastervorlage periodisch wiederkehrende, besonders hervorgehobene Rasterlinien aufweist.

Vorzugsweise kommen afür Darstellungen harmonischer Schwingungen, aber auch Sägezahnmodulationsbilder oder besonders vorteilhaft Rechteckmodulationsschwingungen in Betracht. Hierbei lassen sich die Schwingungsbilder in ihrer Amplitude, Frequenz und/oder Phasenlage variieren, um verschiedene unterscheidbare Rasterlinien zu erhalten. Bei unterschiedlicher Phasenlage der Rasterlinien zueinander ist die Rastervorlage im wesentlichen parallel zur Stereobasis auszurichten, um die genaue Analyse der Rasterbilder im Kamerabild zu ermöglichen. Außerdem lassen sich die Rasterlinien zusätzlich oder ergänzend in ihrer Lichtwellenlänge und/oder Liniendicke modifizieren.

Von Vorteil ist weiterhin der Einbau von nicht modulierten (geraden) Linien zwischen modulierten Rasterlinien. Geeignet sind auch Rasterlinien mit stückweise unterschiedlicher Modulation.

Um die Unterschiedlichkeit der Rasterlinien groß zu halten (gute Unterscheidbarkeit auch bei oberflächenbedingter Verzerrung), ist es sinnvoll, daß sich die Rasterlinien innerhalb der Rastervorlage sequentiell wiederholen. Solche Sequenzen unterschiedlicher Linien sind prinzipiell aus beliebig vielen Linien zusammenstellbar, vorteilhaft (und für die meisten Fälle ausreichend) sind aber bereits Sequenzen aus drei Rasterlinien verschiedener Modulation. Dabei ist es aber dennoch (zur Vereinfachung) sinnvoll, daß die Sequenzen auch eine unmodulierte Rasterlinie enthalten. Das ist besonders für eine Grobanalyse, bei der nur eine Sorte von Rasterlinien erfaßt wird, von Vorteil.

Der Aufbau einer Sequenz von Rasterlinien wird besonders einfach und vorteilhaft vorgenommen durch die Verwendung von Rasterlinien in Form von Rechteckmodulationsschwingungen, die deutlich in ihrer Amplitude und/oder Phasenlage verschieden sind. Besonders vorteilhaft ist die Verwendung einer Sequenz aus unmodulierter Rasterlinie (Rechteckschwingung mit Amplitude gleich Null) und Rechteckschwingung mit um π verschobener Phase.

Für die Bildanalyse bei Verwendung von Rasterlinien in Form von Rechteck- oder Sägezahnmodulationsschwingungen ist es von Vorteil, daß die Rastervorlage im wesentlichen parallel und die Rasterlinien im wesentlichen senkrecht zur Stereobasis ausgerichtet sind. Damit bleibt gewährleistet, daß die Amplitudensprünge (innerhalb einer sogenannten Kernebene der stereografischen Abbildung) in Projektor-Bildebene und Kamera-Bildebene stets parallel zueinander bleiben, egal wie kompliziert die Körperoberfläche geformt ist. Damit wird die Bildanalyse wesentlich erleichtert.

Der Erfindung liegt die Überlegung zugrunde, daß die Abtastdichte bei der Rasterstereografie nur erhöht werden kann, wenn die Rasterlinien auch in kritischen Bereichen (Bereichen großer Tiefenmodulation der Körperoberfläche, in denen Überschneidungen und Versetzungen der Rasterlinien im Kamerabild erscheinen) eindeutig zuordenbar sind. Dies geschieht erfindungsgemäß durch eine individuelle Kennung für zumindest eng benachbarte, vorzugsweise aber auch mehrere aufeinanderfolgende Rasterlinien innerhalb der Rastervorlage durch geeignete Modulation der Rasterlinien, die in einem automatischen Bildverarbeitungsprozeß einfach analysierbar ist.

Mit der erfindungsgemäßen Vorrichtung ist es möglich, die Abtastdichte der Körperoberfläche (d.h. die Liniendichte der Rastervorlage) zu erhöhen und dabei eine eindeutige Zuordnung der Linien im Kamerabild zu gewährleisten. Insbesondere bei Verwendung von Rechteckmodulationsschwingungen als Rasterlinien ist die Bildanalyse bezüglich der Linienzuordnung einfach automatisierbar.

Die Erfindung soll nachfolgend anhand eines Ausführungsbeispieles näher erläutert werden. Die Zeichnungen zeigen:

Fig. 1    ein Beispiel für eine erfindungsgemäße Rastervorlage

Fig. 2    die rasterstereografische Aufnahmegeometrie am Beispiel einer rechteckmodulierten Rasterlinie

Fig. 3    eine schematische Darstellung zum longitudinalen Kamerafehler

Fig. 4    eine schematische Darstellung zum lateralen Kamerafehler

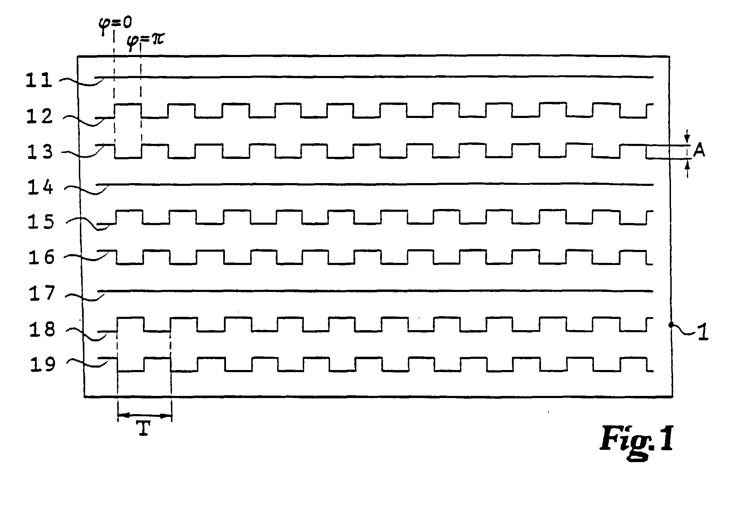

Fig. 1 zeigt ein Beispiel für eine Rastervorlage ais Diapositiv 1 mit Rasterlinien 11 bis 19 in Form von Rechteckmodulationsschwingungen. Dabei sind die Rasterlinien 11,14,17 usw. nicht moduliert (Amplitude 0). Die Rasterlinien 12,15,18 usw. sind mit konstanter Amplitude A und Frequenz A/T, wobei T die Schwingungsfrequenz ist, sowie der Phase $\varphi = 0$ moduliert, die Rasterlinien 13,16,19 usw. mit gleicher Amplitude und Frequenz, aber mit der Phase $\varphi = \pi$.

Die nicht modulierten Rasterlinien 11,14,17... können nach dem bisherigen Verfahren gefunden werden, indem glatte Linienstücke mit einer Mindestlänge > T/2 gesucht werden. Da diese Rasterlinien 11 bis 19 - unter sonst gleichen Verhältnissen - jetzt den dreifachen Abstand haben, ist die Gefahr einer fehlerhaften Bildanalyse entsprechend reduziert. Die modulierten Rasterlinien 12,15,18 ... und 13,16,19 ... werden bei diesem Teil der Bildanalyse nicht gefunden, da die glatten Linienstücke zu kurz sind.

Die modulierten Rasterlinien können mit einem hohen Grad an Zuverlässigkeit identifiziert werden, wenn man sich die Phaseninformation zunutze macht. Im Ausführungsbeispiel der Fig. 1 finden die Sprünge jeweils an den gleichen Stellen

$$x = n \cdot T/2 \; (n = 11,12,13...)$$

statt. Abhängig von der Geometrie der Aufnahmeanordnung ist es möglich, den Ort dieser Sprünge im Kamerabild vorherzusagen, und zwar unabhängig von der Form und Lage der vermessenen Oberfläche. Dadurch kann bei der Linienanalyse die Linienform ähnlich wie bei einer phasenempfindlichen Gleichrichtung demoduliert werden. Im Fall der Fig. 1 können so die Rasterlinien mit Phase $\varphi = 0$ und diejenigen mit Phase $\varphi = \pi$ eindeutig unterschieden werden. Jede dieser Liniengruppen hat wiederum den dreifachen Abstand im Vergleich zu einem unmodulierten Linienraster, so daß auch für die modulierten Rasterlinien die Gefahr einer falschen Zuordnung entsprechend reduziert ist.

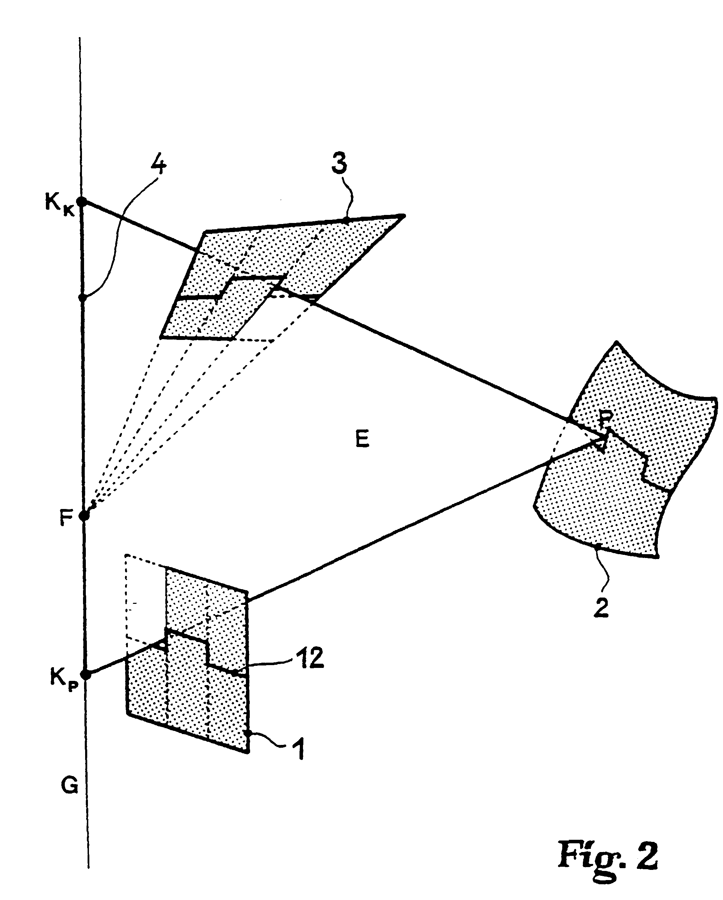

In Fig. 2 ist die für diese Methode vorzugsweise verwendete Aufnahmegeometrie schematisch dargestellt. Der Knotenpunkt des Projektors $K_p$ und der Knotenpunkt der Kamera $K_k$ bilden die Stereobasis. Die abbildenden Systeme sind, wie üblich, invertiert dargestellt. Im hier dargestellten Fall der Verwendung von Rasterlinien 11 bis 19 in Form von Rechteckmodulationsschwingungen ist die Stereobasis 4 parallel zum Diapositiv 1 und senkrecht zu der ausgewählten einzelnen Rasterlinie 12 ausgerichtet (Idealgeometrie). Auf die zu vermessende Fläche 2 wird die Rasterlinie 12 projiziert. Sie wird in die Kamera-Bildebene 3 abgebildet.

Die oben erwähnten Sprungstellen (Orte konstanter Phase im Diapositiv 1) werden durch das Projektionsobjektiv auf die Oberfläche 2 projiziert. Sie liegen dabei auf einem Bündel von Ebenen, die die Gerade G gemeinsam haben. Die Gerade G liegt parallel zum Diapositiv 1 und geht durch den Knotenpunkt $K_p$. Bei der Idealgeometrie nach Fig. 2 fällt die Gerade G mit der Stereobasis 4 zusammen. Die Ebenen der Amplitudensprünge bilden dann sogenannte Kernebenen E. In Fig. 2 ist eine einzelne Kernebene E dargestellt, die durch G und den Oberflächenpunkt P definiert wird. Die Spuren der Kernebenen E in der Kamera-Bildebene 3 werden als Kernstrahlen oder Epipolaren bezeichnet (in Fig. 2 gestrichelt eingezeichnet). In der Kamera-Bildebene 3 bilden sie ein Geradenbündel mit einem gemeinsamen Schnittpunkt (Fluchtpunkt F). Dieser Fluchtpunkt F ist gleichzeitig der Schnittpunkt der Kamera-Bildebene 3 mit der Geraden G.

In der Projektor-Bildebene, in der sich das Diapositiv 1 befindet, bilden die Kernstrahlen ein System von parallelen Linien. In Bezug auf die Modulation der Rasterlinie 12 stellen sie die Orte konstanter Phase dar.

Somit werden die Orte konstanter Phase, also speziell die Sprungstellen der Rasterlinie 12, in der Kamera-Bildebene 3 durch die Epipolaren dargestellt, und zwar unabhängig von Lage und Form der untersuchten Oberfläche 2. Bei kleinen Abweichungen von der Idealgeometrie treten gewisse Fehler auf, die weiter unten diskutiert werden.

Der Fluchtpunkt F und die Epipolaren der Sprungstellen in der Kamera-Bildebene 3 lassen sich aus der Geometrie der Anordnung berechnen. Diese kann beispielsweise durch photoerammetrische Kalibrierung nach einem der bekannten Verfahren bestimmt werden (z.B. Photogrammetric Engineering and Remote Sensing 48 [1982], 67-72 und 215-220).

Die Bildanalyse geschieht dann in der Weise, daß zunächst die glatten, unmodulierten Rasterlinien 11,14,17 mit Hilfe eines Liniensuch-Algorithmus bestimmt werden. In einem zweiten Schritt werden diejenigen Rasterlinien 12,15,18 gesucht, die auf den Epipolaren mit konstanter Phase bei $\varphi = 0,2\pi, 4\pi$ usw. einen positiven, bei $\varphi = \pi, 3\pi, 5\pi$ usw. einen negativen Sprung aufweisen. Anschließend werden die Rasterlinien 13,16,19 gesucht, die an diesen Stellen einen jeweils entgegengesetzten Sprung zeigen.

Eine Variante der in Fig. 1 dargestellten Rastervorlage 1 kann darin bestehen, daß alle Rasterlinien mit unterschiedlichen Phasen moduliert sind. Die Wiederholungsperiode von Rasterlinien mit gleicher Phase (3 im obigen Beispiel) kann dadurch vergrößert und die Zuverlässigkeit der Linienidentifikation erhöht werden. Die Zahl der auf diese Weise möglichen Liniencodierungen ist aber durch die Auflösung der Kamera begrenzt.

Grundsätzlich ist es auch möglich, die Amplitude zur Codierung heranzuziehen. Da die Amplitude jedoch in Abhängigkeit von der Flächenneigung unterschiedlich abgebildet wird, sind hier nur grobe Abstufungen, wie im obigen Beispiel, sinnvoll.

Auch die Periodenlänge T bzw. (Orts-)Frequenz kann zur Codierung verwendet werden, wobei im wesentlichen ebenfalls die Kameraauflösung der begrenzende Faktor ist. Um die Gefahr von Aliasing-Effekten zu vermindern, sollten die verwendeten Frequenzen keine Harmonischen einer gemeinsamen Grundfrequenz sein.

Weiterhin sind Rasterlinien mit stückweise unterschiedlicher Modulation denkbar, allerdings ebenfalls mit den oben genannten Einschränkungen.

Schließlich können verschiedene Wellenformen verwendet werden. Rechteckfunktionen haben den Vorteil einer einfachen lokalen Phasenbestimmung. Sofern genügend viele vollständige Perioden T vermessen werden können, sind auch sinusförmige oder ähnliche stetige Wellenformen möglich. Die Identifikation der Rasterlinien erfolgt auch hier durch Filterung mittels phasenempfindlicher Gleichrichtung.

Im folgenden sollen für die im Beispiel angewendeten Rasterlinienstrukturen mit Rechteckmodulation die möglichen Abweichungen von der oben angenommenen Idealgeometrie diskutiert werden.

In der Praxis ist es nicht möglich, die Idealgeometrie exakt zu realisieren. Daher treten Fehler auf die sich in der Weise auswirken, daß die Orte konstanter Phase in der Kamera-Bildebene nicht mehr exakt (d.h. ohne Kenntnis von Lage und Form der Fläche) vorhergesagt werden können. Für die praktische Anwendung ist daher von Bedeutung, wie groß etwaige Justierfehler sein dürfen, um eine vernachlässigbare Auswirkung auf die Vorhersagegenauigkeit der Epipolaren zu haben.

Die Geometriefehler betreffen die Orientierung der Stereobasis 4 relativ zum Diapositiv 1. Ist die Stereobasis 4 nicht parallel zum Diapositiv 1 und senkrecht zu den Rasterlinien 11 bis 19 ausgerichtet, so liegt der Kamera-Knotenpunkt $K_k$ nicht auf der Geraden G (Fig. 2). In diesem Fall sind die Orte konstanter Phase im Kamerabild abhängig von der Lage und Form der Fläche.

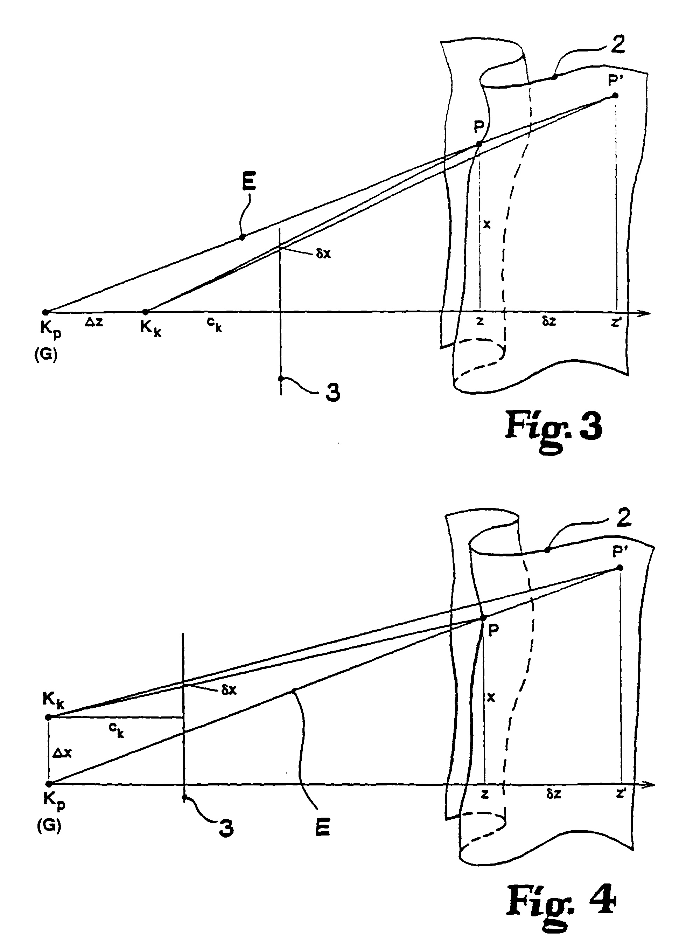

Die Abhängigkeit ist jedoch gering, wenn die Tiefenmodulation der Fläche klein ist im Vergleich zu ihrer Entfernung von der Stereobasis 4, und wenn der Kamera-Knotenpunkt $K_k$ genügend nahe an der Geraden G liegt. Die resultierenden Fehler lassen sich aus der lateralen Abweichung $\Delta x$ und der longitudinalen Abweichung $\Delta z$ des Kamera-Knotenpunkts $K_k$ von der Geraden G abschätzen (Fig. 3 und 4). In Fig. 3 ist die Wirkung einer longitudinalen Abweichung $\Delta z$ dargestellt. Das Diapositiv 1 (nicht eingezeichnet) und die Gerade G stehen senkrecht zur Zeichenebene. Die Kernebenen E (Flächen konstanter Phase) stehen daher ebenfalls senkrecht auf der Zeichenebene und laufen durch $K_p$. Der Kamera-Knotenpunkt $K_k$ weicht um $\Delta z$ von der Sollage auf der Geraden G ab. Die in einer Kernebene E laufenden Bildstrahlen $\overline{K_pP}$ und $\overline{K_pP'}$ treffen die Oberfläche 2 in den Punkten P und P' in unterschiedlichen Tiefen z und z' (Tiefenmodulation $\delta z$ der Oberfläche 2). Da $K_k$ nicht auf G liegt, liegen auch die Kamera-Bildstrahlen $\overline{K_kP}$ und $\overline{K_kP'}$ nicht auf der Kernebene E. Daher werden die Flächenpunkte P und P' nicht mehr auf dieselbe Epipolare in der Kamera-Bildebene 3 projiziert. Es ergibt sich ein Fehler

$$\delta x = -\delta z \cdot \Delta z \cdot x \cdot c_k/z^3 \qquad (2)$$

oder

$$\delta x = -\delta z/z \cdot \Delta z/z \cdot x/z \cdot c_k \qquad (2a)$$

des Kamera-Bildpunktes bezogen auf die Epipolare für den Sollwert der Entfernung z, wobei x der laterale Abstand dieses Punktes von der Mittelebene (Symmetrieebene der Anordnung) und $c_k$ die Kammerkonstante der Kamera (Bildweite) ist.

In ähnlicher Weise wirkt sich eine laterale Abweichung $\Delta x$ aus (Fig. 4). Man erhält

$$\delta x = \delta z \cdot \Delta x \cdot c_k/z^2 \qquad (3)$$

oder

$$\delta x = \delta z/z \cdot \Delta x/z \cdot c_k \qquad (3a)$$

Aus der Form der Gleichungen (2a) und (3a) ist erkennbar, daß die Fehler jeweils vom Verhältnis der Abweichungen $\Delta x$ bzw. $\Delta z$ zur Entfernung z abhängen, also im allgemeinen klein sind. Die anderen Faktoren in den Gleichungen sind in der Regel kleiner als 1. Der Fehler ist außerdem natürlicherweise proportional zur Bildweite $c_k$.

Beide Fehler sind additiv. Berücksichtigt man die endliche Auflösung der üblicherweise verwendeten Halbleiter-Videokameras, so liegen die zulässigen Fehler $\Delta x$ und $\Delta z$ der Kameraposition im allgemeinen in einer Größenordnung, die mit geringem Justieraufwand eingehalten werden kann, sofern die Tiefenmodulation $\delta z/z$ der Fläche in der Größenordnung von 10-20 % der Aufnahmeentfernung liegt.

Damit liegt mit der im Beispiel erläuterten Anwendung von Rasterlinien 11 bis 19 mit Rechteckmodulation eine einfach realisierbare Vorrichtung mit erhöhter Rasterliniendichte vor, die problemlos die Büdanalyse der durch die Oberfläche verzerrten Rasterabbildung gestattet, ohne daß damit ein unangemessen hoher Justieraufwand verbunden ist.

**Patentansprüche**

1.  Vorrichtung zur rasterstereografischen Vermessung von Körperoberflächen (2), vorzugsweise unregelmäßig geformter Objekte, mit einem Rasterprojektor ($K_p$) zur Projektion einer zugehörigen Rastervoflage (1) mit einer Vielzahl von Rasterlinien (11 bis 19) auf die Körperoberfläche (2) und mit einer Kamera ($K_k$) zur Aufzeichnung eines durch die Oberflächengestalt verzerrten Linienbildes der Rastervorlage (1), wobei der Rasterprojektor ($K_p$) mit der Kamera ($K_k$) eine Stereobasis (4) bildet und die Rastervorlage (1) örtlich modulierte Rasterlinien (11 bis 19) aufweist, bei denen sich benachbarte Rasterlinien (11 bis 19) voneinander unterscheiden, **dadurch gekennzeichnet,** daß die Rastervorlage (1) Rasterlinien (11 bis 19) mit periodischen Strukturen unterschiedlicher Form enthält und die Rastervorlage (1) periodisch wiederkehrende, besonders hervorgehobene Rasterliniene (11, 14, 17) aufweist.

2.  Vorrichtung nach Anspruch 1, dadurch gekennzeichnet, daß die Rastervorlage (1) Rasterlinien (11 bis 19) in Form von Darstellungen harmonischer Schwingungen enthält.

3.  Vorrichtung nach Anspruch 1, dadurch gekennzeichnet, daß die Rastervorlage (1) Rasterlinien (11 bis 19) in Form von Rechteckmodulationsschwingungen aufweist.

4.  Vorrichtung nach Anspruch 1, dadurch gekennzeichnet, daß die Rastervorlage (1) Rasterlinien (11 bis 19) in Form von Sägezahnmodulationsschwingungen aufweist.

5.  Vorrichtung nach einem der Ansprüche 1 bis 4, dadurch gekennzeichnet, daß die Rastervorlage (1) Schwingungsbilder mit unterschiedlicher Amplitude (A) als Rasterlinien (11 bis 19) aufweist.

6.  Vorrichtung nach einem der Ansprüche 1 bis 4, dadurch gekennzeichnet, daß die Rastervorlage (1) Schwingungsbilder mit unterschiedlicher Phasenlage als Rasterlinien (11 bis 19) aufweist, wobei die Rastervorlage (1) im wesentlichen parallel zur Stereobasis (4) angeordnet ist.

7.  Vorrichtung nach einem der Ansprüche 3 oder 4, dadurch gekennzeichnet, daß die Rastervorlage (1) im wesentlichen parallel zur Stereobasis (4) ausgerichtet ist, wobei die Richtung der Rasterlinien (11 bis 19) im wesentlichen senkrecht zur Stereobasis (4) liegt.

8.  Vorrichtung nach einem der Ansprüche 1 bis 4, dadurch gekennzeichnet, daß die Rastervorlage (1) Schwingungsbilder mit unterschiedlicher Frequenz als Rasterlinien (11 bis 19) aufweist.

9.  Vorrichtung nach einem der Ansprüche 1 bis 6 und 8, dadurch gekennzeichnet, daß die Rastervorlage (1) Rasterlinien (11 bis 19) mit unterschiedlicher Licht-Wellenlänge aufweist.

10. Vorrichtung nach einem der Ansprüche 1 bis 6 und 8, dadurch gekennzeichnet, daß die Rastervorlage (1) Rasterlinien (11 bis 19) mit unterschiedlicher Liniendicke aufweist.

11. Vorrichtung nach einem der Ansprüche 1 bis 6 und 8 dadurch gekennzeichnet, daß die Rastervorlage (1) Rasterlinien (11 bis 19) mit stückweise unterschiedlicher Modulation aufweist.

12. Vorrichtung nach einem der Ansprüche 1 bis 6 und 8 bis 11, dadurch gekennzeichnet, daß zwischen unterschiedlich modulierten Rasterlinien auch unmodulierte Rasterlinien (11, 14, 17) in der Rastervorlage (1) enthalten sind.

13. Vorrichtung nach einem der Ansprüche 1 bis 6 und 8 bis 12, dadurch gekennzeichnet, daß sich die unterschiedlichen Rasterlinien (11 bis 19) in der Rastervorlage sequentiell wiederholen.

**14.** Vorrichtung nach Anspruch 13, dadurch gekennzeichnet, daß eine Sequenz von Rasterlinien (11 bis 19) aus beliebig vielen, unterschiedlichen Rasterlinien zusammengesetzt ist.

**15.** Vorrichtung nach Anspruch 13, dadurch gekennzeichnet, daß eine Sequenz von Rasterlinien (11 bis 19) aus drei Rasterlinien (11, 12, 13) zusammengesetzt ist.

**16.** Vorrichtung nach Anspruch 13, dadurch gekennzeichnet, daß die Rastervorlage (1) aus wiederkehrenden Sequenzen von Rasterlinien (11, 14, 17) in Form von Rechteckmodulationsschwingungen mit unterschiedlicher Phasenlage ($\varphi$) und/oder unterschiedlicher Amplitude (A) zusammengesetzt ist.

**17.** Vorrichtung nach Anspruch 16, dadurch gekennzeichnet, daß die Rastervorlage (1) aus Sequenzen einer unmodulierten Rasterlinie (11, 14, 17) und zweier Rasterlinien (12, 15, 18 bzw. 13, 16, 19) in Form von Rechteckmodulationsschwingungen mit um $\pi$ verschobener Phase besteht.

**Claims**

**1.** Device for scanning body surfaces (2), preferably irregularly shaped objects, by raster stereography, comprising a raster projector $H(K_p)$ for projecting an associated raster master (1) having a multiplicity of raster lines (11 to 19) on the body surface (2) and having a camera $H(K_K)$ for recording a line pattern, distorted by the surface shape, of the raster master (1), the raster projector $H(K_p)$ forming a stereo base (4) with the camera $H(K_K)$ and the raster master (1) having locally modulated raster lines (11 to 19) in which adjacent raster lines (11 to 19) differ from one another, characterized in that the raster master (1) contains raster lines (11 to 19) having periodic structures of different shape and the raster master (1) having periodically repeating, particularly highlighted raster lines (11, 14, 17).

**2.** Device according to Claim 1, characterized in that the raster master (1) contains raster lines (11 to 19) in the form of representations of harmonic oscillations.

**3.** Device according to Claim 1, characterized in that the raster master (1) has raster lines (11 to 19) in the form of rectangularly modulated oscillations.

**4.** Device according to Claim 1, characterized in that the raster master (1) has raster lines (11 to 19) in the form of sawtooth-modulated oscillations.

**5.** Device according to one of Claims 1 to 4, characterized in that the raster master (1) has oscillation patterns having different amplitude (A) as raster lines (11 to 19).

**6.** Device according to one of Claims 1 to 4, characterized in that the raster master (1) has oscillation patterns having different phase position as raster lines (11 to 19), the raster master (1) being disposed essentially parallel to the stereo base (4).

**7.** Device according to one of Claims 3 or 4, characterized in that the raster master (1) is aligned essentially parallel to the stereo base (4), the direction of the raster lines (11 to 19) being situated essentially perpendicularly to the stereo base (4).

**8.** Device according to one of Claims 1 to 4, characterized in that the raster master (1) has oscillation patterns of different frequencies as raster lines (11 to 19).

**9.** Device according to one of Claims 1 to 6 and 8, characterized in that the raster master (1) has raster lines (11 to 19) of different light wavelengths.

**10.** Device according to one of Claims 1 to 6 and 8, characterized in that the raster master (1) has raster lines (11 to 19) of different line thicknesses.

**11.** Device according to one of Claims 1 to 6 and 8, characterized in that the raster master (1) has raster lines (11 to 19) of piecewise different modulation.

**12.** Device according to one of Claims 1 to 6 and 8 to 11, characterized in that the raster master (1) also contains unmodulated raster lines (11, 14, 17) between the differently modulated raster lines.

**13.** Device according to one of Claims 1 to 6 and 8 to 12, characterized in that the different raster lines (11 to 19) in the raster master repeat sequentially.

**14.** Device according to Claim 13, characterized in that a sequence of raster lines (11 to 19) is made up of a randomly large number of different raster lines.

**15.** Device according to Claim 13, characterized in that a sequence of raster lines (11 to 19) is made up of three raster lines (11, 12, 13).

**16.** Device according to Claim 13, characterized in that the raster master (1) is made up of repeating sequences of raster lines (11, 14, 17) in the form of rectangularly modulated oscillations with different phase position ($\varphi$) and/or different amplitude (A).

**17.** Device according to Claim 16, characterized in that the raster master (1) comprises sequences of one unmodulated raster line (11, 14, 17) and two raster lines (12, 15, 18 or 13, 16, 19, respectively) in the form of rectangularly modulated oscillations having a phase shift of $\pi$.

## Revendications

1. Dispositif pour la mesure stéréographique de surfaces (2) de corps par trame, de préférence d'objets de forme irrégulière, comportant un projecteur de balayage ($K_p$) pour la projection d'un modèle tramé (1) avec un grand nombre de lignes de trame (11 à 19) sur la surface (2) du corps et comportant une caméra ($K_k$) pour l'enregistrement d'une image en lignes, déformée par la forme de la surface, du modèle tramé (1), le projecteur de trame ($K_p$) formant avec la caméra ($K_k$) une base stéréo (4) et le modèle tramé (1) présentant localement des lignes de trame (11 à 19) modulées dont les lignes de trame (11 à 19) voisines diffèrent les unes des autres, caractérisé en ce que le modèle tramé (1) contient des lignes de trame (11 à 19) avec des structures périodiques de formes différentes, et en ce que le modèle tramé (1) présente des lignes de trame (11, 14, 17) particulièrement marquées revenant périodiquement.

2. Dispositif selon la revendication 1, caractérisé en ce que le modèle tramé (1) contient des lignes de trame (11 à 19) sous la forme de représentations d'oscillations harmoniques.

3. Dispositif selon la revendication 1, caractérisé en ce que le modèle tramé (1) présente des lignes de trame (11 à 19) sous la forme d'oscillations rectangulaires.

4. Dispositif selon la revendication 1, caractérisé en ce que le modèle tramé (1) présente des lignes de trame (11 à 19) sous la forme d'oscillations en dents de scie.

5. Dispositif selon l'une des revendications 1 à 4, caractérisé en ce que le modèle tramé (1) présente des images d'oscillations d'amplitudes (A) différentes en tant que lignes de trame (11 à 19).

6. Dispositif selon l'une des revendications 1 à 4, caractérisé en ce que le modèle tramé (1) présente des images d'oscillations de phase différente, en tant que lignes de trame (11 à 19), le modèle tramé (1) étant disposé sensiblement parallèlement à la base stéréo (4).

7. Dispositif selon l'une des revendications 3 ou 4, caractérisé en ce que le modèle tramé (1) est orienté sensiblement parallèlement à la base stéréo (4), la direction des lignes de trame (11 à 19) étant sensiblement perpendiculaire à la base stéréo (4).

8. Dispositif selon l'une des revendications 1 à 4, caractérisé en ce que le modèle tramé (1) présente des images d'oscillations de fréquence différente en tant que lignes de trame (11 à 19).

9. Dispositif selon l'une des revendications 1 à 6 et 8, caractérisé en ce que le modèle tramé (1) présente des lignes de trame (11 à 19) de longueurs d'ondes de lumière différentes.

10. Dispositif selon l'une des revendications 1 à 6 et 8, caractérisé en ce que le modèle tramé (1) présente des lignes de trame (11 à 19) d'épaisseur de ligne différente.

11. Dispositif selon l'une des revendications 1 à 6 et 8, caractérisé en ce que le modèle tramé (1) présente des lignes de trame (11 à 19) avec modulation différente selon les tronçons.

12. Dispositif selon l'une des revendications 1 à 6 et 8 à 11, caractérisé en ce que le modèle tramé (1) contient aussi des lignes de trame (11, 14, 17) non modulées entre des lignes de trame modulées différemment.

13. Dispositif selon l'une des revendications 1 à 6 et 8 à 12, caractérisé en ce que les différentes lignes de trame (11 à 19) se renouvellent de manière séquentielle dans le modèle tramé.

14. Dispositif selon la revendication 13, caractérisé en ce qu'une séquence de lignes de trame (11 à 19) est composée d'un nombre quelconque de lignes de trame différentes.

15. Dispositif selon la revendication 13, caractérisé en ce qu'une séquence de lignes de trame (11 à 19) est composée de trois lignes de trame (11, 12, 13).

16. Dispositif selon la revendication 13, caractérisé en ce que le modèle tramé (1) est composé de séquences récurrentes de lignes de trame (11, 14, 17) sous la forme d'oscillations rectangulaires de phase ($\varphi$) différente et/ou d'amplitude (A) différente.

17. Dispositif selon la revendication 16, caractérisé en ce que le modèle tramé (1) est constitué de séquence d'une ligne de trame (11, 14, 17) non modulée et deux lignes de trame (12, 15, 18 respectivement 13, 16, 19) sous la forme d'oscillations rectangulaires avec phase décalée de $\pi$.

*Fig.1*

*Fig. 2*

Fig. 3

Fig. 4